# EUROPÄISCHE PATENTSCHRIFT

(11) **EP 3 167 213 B1**
(45) Veröffentlichungstag und Bekanntmachung des Hinweises auf die Patenterteilung: **18.07.2018**
(21) Anmeldenummer: 14761796.3
(22) Anmeldetag: 10.09.2014
(51) Int. Cl.: F16K 7/07

(54) **QUETSCHVENTIL**
PINCH VALVE
VANNE À MANCHON

(43) Veröffentlichungstag der Anmeldung: 17.05.2017
(73) Patentinhaber: Festo AG & Co. KG, 73734 Esslingen (DE)
(72) Erfinder: BERWANGER, Johannes, 73732 Esslingen (DE); HERRIG, Martin, 73265 Dettingen (DE)
(74) Vertreter: Patentanwälte Magenbauer & Kollegen Partnerschaft mbB
(86) Internationale Anmeldenummer: PCT/EP2014/002448
(87) Internationale Veröffentlichungsnummer: WO 2016/037629

(56) Entgegenhaltungen:
- EP-B1- 0 690 254
- DE-B3-102007 006 764
- US-A- 4 108 418
- US-A- 4 132 382
- US-A- 5 690 142

## Beschreibung

Die Erfindung betrifft ein Quetschventil, mit einem Ventilgehäuse, in dem sich zwischen zwei Fluidanschlüssen ein einen axial durchgehenden Ventilkanal umschließendes und an seinen beiden axialen Enden jeweils einen ringförmigen Befestigungsflansch aufweisendes Ventilglied erstreckt, das über einen aus gummielastischem Material bestehenden Ventilkörper verfügt, der einen schlauchförmigen Mittelabschnitt mit radial verformbarer Wandung und an den beiden Enden des Mittelabschnittes einstückig angeformte, zu den Befestigungsflanschen gehörende Flanschabschnitte aufweist, wobei jeder Flanschabschnitt einen den Mittelabschnitt radial überragenden, zur axialen Fixierung des Ventilgliedes im Ventilgehäuse genutzten integralen ringförmigen Befestigungsabschnitt aufweist, und wobei in jeden Flanschabschnitt des Ventilkörpers ein aus einem formstabilen Material bestehender, sich in den Befestigungsabschnitt hinein erstreckender ringförmiger Versteifungskörper koaxial eingebettet ist.

Ein aus der DE 10 2007 006 764 B3 bekanntes Quetschventil verfügt über ein längliches Ventilglied, das von einem Ventilkanal durchsetzt ist und aus einem einstückigen, gummielastisch verformbaren Ventilkörper besteht. Der Ventilkörper hat einen schlauchförmigen Mittelabschnitt, an den sich axial beidseits jeweils ein einen Befestigungsflansch bildender einstückiger Flanschabschnitt anschließt. Das Ventilglied ist Bestandteil einer Ventilpatrone, die auswechselbar in ein Ventilgehäuse des Quetschventils eingesteckt ist und die außer dem Ventilglied auch noch eine den Mittelabschnitt des Ventilgliedes umschließende rohrförmige Stützstruktur aufweist, die sich aus zwei radial außen an den Mittelabschnitt angesetzten Schalenelementen zusammensetzt. Im montierten Zustand ist das Ventilglied mit seinen beiden Befestigungsflanschen im Ventilgehäuse axial verspannt, wobei jeder Befestigungsflansch mit seiner Außenfläche an einem einen Fluidanschluss definierenden Anschlusskörper des Ventilgehäuses anliegt und an seiner axialen Innenfläche von der rohrförmigen Stützstruktur abgestützt wird.

Das bekannte Quetschventil arbeitet sehr zuverlässig. Allerdings ist es zur sicheren gehäusefesten Fixierung des Ventilgliedes bei großen Durchmessern des Ventilkanals erforderlich, relativ große Abmessungen für den den Mittelabschnitt radial überragenden ringförmigen Befestigungsabschnitt jedes Flanschabschnittes zu wählen. Ansonsten besteht die Gefahr, dass sich ein Befestigungsflansch bei der radialen Verformung der Wandung des schlauchförmigen Mittelabschnittes aus seiner Klemmung im Gehäuse löst.

Aus der EP 0690254 B1 ist ein Schlauchquetschventil bekannt, das über ein Ventilglied mit einem gummielastischen Ventilkörper verfügt, der durchweg schlauchförmig und mit gleicher Wandstärke ausgebildet ist. Zur axialen Fixierung sind bei diesem Ventilglied in die axialen Endabschnitte des schlauchförmigen Ventilkörpers ringförmige Halteelemente eingebettet, die radial über den Ventilkörper hinausragen und von denen das eine einen zur axialen Abstützung mit dem Ventilgehäuse zusammenwirkenden Stützring bildet und das andere als ein Bestandteil einer Renkverbindung ausgebildet ist.

Aus der US 4 108 418 A ist ein Quetschventil der eingangs genannten Art bekannt, das einen von einer flexiblen, schlauchförmigen Hülse gebildeten Ventilkörper aufweist, der stirnseitig mit radial vorstehenden Endflanschen versehen ist, in die jeweils ein ringförmiger Versteifungskörper eingebettet ist, der aus Metall oder aus einem anderen starren Material besteht.

Der Erfindung liegt die Aufgabe zugrunde, bei einem Quetschventil der eingangs genannten Art Maßnahmen vorzusehen, die auch bei großen Kanaldurchmessern in Verbindung mit kompakten Abmessungen eine sichere Fixierung des Ventilgliedes gewährleisten.

Zur Lösung dieser Aufgabe ist erfindungsgemäß vorgesehen, dass die eingebetteten Versteifungskörper jeweils eine oder mehrere axiale Durchbrechungen aufweisen und/oder über eine oder mehrere randseitige Aussparungen verfügen, die jeweils vom Material des Ventilkörpers formschlüssig durchsetzt ist beziehungsweise sind.

Der in den ringförmigen Flanschabschnitt eingebettete Versteifungskörper erhöht die Stabilität des zugeordneten Befestigungsflansches, ohne die Verformbarkeit des schlauchförmigen Mittelabschnittes zu beeinträchtigen. Selbst wenn der schlauchförmige Mittelabschnitt aufgrund eines großen Durchmessers des zu steuernden Ventilkanals während des Betriebes des Quetschventils starke Dehnungen erfährt, können die Befestigungsflansche aufgrund des eingebetteten Versteifungskörpers die auf sie einwirkenden Zugkräfte ohne relevante Verformung aufnehmen und in das Ventilgehäuse ableiten. Selbst bei geringen radialen Abmessungen des Befestigungsabschnittes besteht somit nicht die Gefahr, dass die Befestigungsflansche bei der Betätigung des Ventilgliedes aus einem im Gehäuse ausgebildeten Klemmspalt herausgezogen werden. Mithin ermöglicht die erfindungsgemäße Maßnahme die Realisierung von Quetschventilen mit großer Nennweite in Verbindung mit kompakten diametralen Außenabmessungen. Jeder ringförmige Versteifungskörper ist formschlüssig in das gummielastische, vorzugsweise von einem Elastomermaterial gebildete Material des Ventilkörpers eingebettet. Eine besonders hohe Intensität des Formschlusses wird dadurch erzielt, dass die Versteifungskörper jeweils eine oder mehrere axiale Durchbrechungen aufweisen, die vom Material des Ventilkörpers durchsetzt und ausgefüllt sind. Zusätzlich oder alternativ verfügt jeder Versteifungskörper über eine oder mehrere randseitige Aussparungen, die ebenfalls vom Material des Ventilkörpers formschlüssig ausgefüllt und durchsetzt sind.

Vorteilhafte Weiterbildungen der Erfindung gehen aus den Unteransprüchen hervor.

Vorzugsweise hat jeder Flanschabschnitt radial außen eine runde und dabei insbesondere kreisrunde Außenkontur. Der zugeordnete Versteifungskörper ist zweckmäßigerweise derart in den Flanschabschnitt eingebettet, dass er dessen radiale Außenkontur nicht überragt. Auf diese Weise kann eine Berührung zwischen dem Ventilgehäuse und dem Versteifungskörper vermieden werden.

Das Ventilglied ist zweckmäßigerweise Bestandteil einer Ventilpatrone, die insbesondere lösbar und auswechselbar in einen internen Aufnahmeraum des Ventilgehäuses eingesetzt ist. Die Ventilpatrone verfügt über eine rohrförmige Stützstruktur, die den Mittelabschnitt des gummielastischen Ventilkörpers radial außen umschließt. Diese Stützstruktur kann die radiale Aufweitung des schlauchförmigen Mittelabschnittes bei der internen Fluidbeaufschlagung des Ventilkanals begrenzen. Vor allem aber dient die rohrförmige Stützstruktur zur axialen Abstützung der ringförmigen Versteifungskörper der beiden Befestigungsflansche. Jeder Versteifungskörper erstreckt sich radial in den einem axialen Endabschnitt der rohrförmigen Stützstruktur vorgelagerten Bereich und kann sich somit bezüglich der rohrförmigen Stützstruktur axial abstützen, wenn aufgrund der radialen Verformung des Mittelabschnittes eine Zugkraft in den zugeordneten Flanschabschnitt eingeleitet wird.

Das Ventilglied kann derart ausgebildet sein, dass die rohrförmige Stützstruktur zur Abstützung eines Versteifungskörpers unmittelbar an dem Versteifungskörper anliegt. Es besteht jedoch auch die Möglichkeit, den jeweiligen Versteifungskörper derart in den Ventilkörper einzubetten, dass eine dünne Schicht gummielastischen Materials des Ventilkörpers axial zwischen dem Versteifungskörper und der Stirnseite der rohrförmigen Stützstruktur vorhanden ist. Dadurch wird die Abstützfunktion nicht beeinträchtigt.

Die rohrförmige Stützstruktur verfügt an ihren beiden Endabschnitten zweckmäßigerweise über mehrere entlang ihres Umfanges, also in der Umfangsrichtung des Ventilkanals verteilt angeordnete Stützvorsprünge, mit denen sie den jeweils axial benachbarten Versteifungskörper axial abstützt. Diese Stützvorsprünge sind insbesondere laschenartig ausgebildet. Mit Hilfe der Stützvorsprünge kann erreicht werden, dass der ringförmige Versteifungskörper in seiner Umfangsrichtung nur punktuell verteilt abgestützt wird.

Die Stützvorsprünge greifen zweckmäßigerweise in Aufnahmetaschen ein, die im Material des Ventilkörpers ausgespart sind. Die Aufnahmetaschen befinden sich zweckmäßigerweise in den Befestigungsabschnitten der beiden Flanschabschnitte, wobei sie sowohl radial außen als auch an der dem jeweils anderen Befestigungsabschnitt zugewandten Stirnseite offen sind.

Für die Gestaltung der rohrförmigen Stützstruktur empfiehlt sich ein mehrschaliger Aufbau. So besteht die Stützstruktur bevorzugt aus mehreren und insbesondere aus zwei bogenförmig gekrümmten Stützschalen, die radial außen an den Mittelabschnitt des Ventilkörpers angesetzt sind, sodass sie in der Umfangsrichtung des Ventilgliedes aneinandergereiht sind. Der mehrschalige Aufbau begünstigt vor allem den Zusammenbau der Ventilpatrone. Man kann die Stützschalen sehr einfach von radial außen her an das Ventilglied ansetzen und auch nach radial außen hin vom Ventilglied abnehmen, falls ein verschleißbedingter Austausch des Ventilgliedes erforderlich sein sollte.

Zweckmäßigerweise verfügt jeder Flanschabschnitt an der vom Mittelabschnitt axial abgewandten axialen Außenfläche über eine Dichtfläche, mit der er an einem den zugeordneten Fluidanschluss des Ventilgehäuses definierenden Anschlusskörper des Ventilgehäuses unter Abdichtung axial anliegt. Die Dichtfläche erstreckt sich insbesondere auch über den Befestigungsabschnitt eines jeweiligen Flanschabschnittes hinweg. Vorzugsweise ist das Ventilglied mit den Befestigungsabschnitten seiner beiden Flanschabschnitte jeweils in einem Klemmspalt im Ventilgehäuse eingespannt, wobei dieser Klemmspalt axial einerseits von einem der erwähnten Fluidanschlüsse und axial andererseits von der rohrförmigen Stützstruktur begrenzt ist.

Eine besonders zweckmäßige Gestaltung der Versteifungskörper sieht vor, dass an einander diametral gegenüberliegenden Außenumfangsabschnitten jeweils eine sich ein Stückweit in der Umfangsrichtung des Versteifungskörpers erstreckende bogenförmige randseitige Aussparung ausgebildet ist. Diese bogenförmigen Randaussparungen sind insbesondere so platziert, dass sie jeweils auf der gleichen Seite einer Ebene liegen, auf der sich auch ein bei der Betätigung des Quetschventils radial verformbarer Wandabschnitt des Mittelabschnittes des Ventilkörpers befindet. Mit anderen Worten kann eine Ebene oder Linie, die durch den Kontaktbereich zweier zum Verschließen des Ventilkanals dicht aneinander anliegender Wandabschnitte des Mittelabschnittes definiert wird, sich im rechten Winkel zu einer Ebene erstrecken, die die beiden sich diametral gegenüberliegenden bogenförmigen Randaussparungen schneidet.

Als eine einfachste Bauform empfiehlt sich für die Versteifungskörper die Form einer Ringscheibe. Dabei können die rechtwinkelig zur Mittelachse der Ringscheibe gemessenen Querabmessungen des Ringscheibenkörpers über den Umfang hinweg variieren. Dies beispielsweise durch die oben erwähnte Ausbildung von Randaussparungen, die insbesondere am radialen Außenrand der Ringscheibe vorgesehen werden. Der ringförmige Versteifungskörper kann zusätzlich oder alternativ auch von einer Vielzahl bohrungsartiger Löcher durchsetzt sein, die ihrerseits vom Material des Ventilkörpers durchsetzt und ausgefüllt sind, um den formschlüssigen Zusammenhalt zwischen dem Ventilkörper und dem Versteifungskörper zu optimieren.

Bei einer anderen Bauform hat der ringförmige Versteifungskörper ein L-förmiges Querschnittsprofil. Er verfügt dann über einen in den Befestigungsabschnitt von radial innen her hineinragenden ringscheibenförmigen Außenabschnitt und über einen vom inneren Rand dieses ringscheibenförmigen Außenabschnittes axial in Richtung zum anderen Versteifungskörper abstehenden hülsenförmigen Innenabschnitt. Auf diese Weise kann das Abbiegen des Mittelabschnittes vom Flanschabschnitt besonders wirkungsvoll unterbunden werden.

Jeder Versteifungskörper besteht vorzugsweise aus Metall oder aus einem Kunststoffmaterial. Auch ein Verbundmaterial insbesondere in einer Kombination aus Metall und Kunststoffmaterial ist vorteilhaft.

Der Ventilkörper wird zweckmäßigerweise als ein spritzgegossenes Elastomerteil hergestellt. Die Versteifungskörper können beim Spritzgießen des Elastomerteils als Einlegeteile integriert werden, sodass sie bei der Spritzgießherstellung unmittelbar umspritzt werden.

Jeder Versteifungskörper kann von dem gummielastischen Material des Ventilkörpers ringsum umschlossen sein. Insbesondere im Bereich der radialen Außenumfangsfläche kann der Versteifungskörper aber auch zumindest partiell von dem gummielastischen Material nicht bedeckt sein.

Der in den Ventilkörper eingebettete Versteifungskörper kann zusätzlich zu der formschlüssigen Fixierung auch noch kraftschlüssig und/oder stoffschlüssig mit dem gummielastischen Material des Ventilkörpers verbunden sein. Auf diese Weise ergibt sich ein besonders inniger Komponentenverbund zwischen den Versteifungskörpern und dem Ventilkörper. Zwischen dem gummielastischen Material des Ventilkörpers und dem starren Material des Versteifungskörpers kann zur Begünstigung einer stoffschlüssigen Verbindung ein Haftvermittler appliziert sein.

Das Quetschventil ist zu seiner Betätigung zweckmäßigerweise mit Betätigungsmitteln ausgestattet, die in der Lage sind, eine reversible radiale Verformung der Wandung des Mittelabschnittes des Ventilkörpers hervorzurufen. Durch entsprechende Betätigung können sich diametral gegenüberliegende Wandabschnitte der Wandung des Mittelabschnittes radial verformt werden, sodass sie ihren gegenseitigen Abstand verändern und dadurch eine Veränderung des freien Querschnittes des Ventilkanals bewirken. Um den Ventilkanal abzusperren, werden die Wandungsabschnitte so weit zusammengedrückt, dass sie unter Abdichtung aneinander anliegen.

Die Betätigungsmittel sind insbesondere für eine durch Fluidkraft hervorrufbare Verformung der Wandung des Mittelabschnittes ausgelegt. Alternativ ist aber auch eine Ausgestaltung möglich, bei der die Verformung der Wandung des Mittelabschnittes durch mechanische Einwirkung hervorrufbar ist.

Nachfolgend wird die Erfindung anhand der beiliegenden Zeichnung näher erläutert. In dieser zeigen:
- Figur 1: eine perspektivische Außenansicht einer bevorzugten ersten Ausführungsform des erfindungsgemäßen Quetschventils,
- Figur 2: einen Längsschnitt des Quetschventils aus Figur 1 gemäß Schnittlinie II-II aus Figuren 1 und 4, wobei eine maximale Offenstellung des Ventilgliedes illustriert ist und wobei in strichpunktierten Linien die mögliche Schließstellung des Ventilgliedes angedeutet ist,
- Figur 3: einen weiteren Querschnitt des Quetschventils gemäß Schnittlinie III-III aus Figur 4,
- Figur 4: einen Querschnitt des Quetschventils gemäß Schnittlinie IV-IV aus Figur 2,
- Figur 5: eine Seitenansicht mit Blickrichtung gemäß Pfeil V aus Figur 4 einer in dem Quetschventil der Figuren 1 bis 4 integrierten Ventilpatrone, die sich aus einem Ventilkörper und einer am Außenumfang des Ventilkörpers platzierten rohrförmigen Stützstruktur zusammensetzt,
- Figur 6: die Ventilpatrone aus Figur 5 in demontiertem Zustand, wobei die in dem Ventilkörper integrierten ringförmigen Versteifungskörper zur Verdeutlichung außerhalb des Ventilkörpers dargestellt sind,
- Figur 7: eine Einzeldarstellung des bei dem Quetschventil der Figuren 1 bis 6 verwendeten Ventilgliedes, wobei der Ventilkörper und die in den Ventilkörper eingebetteten Versteifungskörper in einer Explosionsdarstellung illustriert sind,
- Figur 8: in einer mit Figur 7 vergleichbaren Darstellungsweise eine alternative Ausführungsform eines Ventilgliedes des Quetschventils, und
- Figur 9: einen Querschnitt durch das Ventilglied aus Figur 8 gemäß Schnittlinie IX-IX im Bereich des in einen Flanschabschnitt integrierten Versteifungskörpers.

Das aus der Zeichnung ersichtliche, insgesamt mit Bezugsziffer 1 bezeichnete Quetschventil ermöglicht die Steuerung der Strömung fließfähiger Stoffe, die im Folgenden allgemein als Fluide bezeichnet werden. Das Quetschventil 1 ist beispielsweise in Verbindung mit gasförmigen, flüssigen oder pulvrigen Fluiden einsetzbar.

Das Quetschventil 1 verfügt über ein Ventilgehäuse 2, das einen Aufnahmeraum 3 umgrenzt, in dem ein insgesamt schlauchartig konzipiertes Ventilglied 4 aufgenommen ist. Bei dem illustrierten Ausführungsbeispiel ist das Ventilglied 4 Bestandteil einer insgesamt als Ventilpatrone 5 bezeichneten Baugruppe, die in ihrer Gesamtheit in dem Aufnahmeraum 3 untergebracht ist. Zu der Ventilpatrone 5 gehört außer dem Ventilglied 4 auch noch eine das Ventilglied 4 koaxial umschließende formstabile Stützstruktur 6.

Das Ventilgehäuse 2 hat eine imaginäre Hauptachse 7. Das Ventilglied 4 hat eine Längsachse 8 und ist so in dem Aufnahmeraum 3 platziert, dass die Längsachse 8 mit der Hauptachse 7 zusammenfällt.

Das Ventilglied 4 ist koaxial von einem Ventilkanal 12 durchsetzt. Dieser Ventilkanal 12 mündet mit je einer Kanalöffnung 13a, 13b an jeweils einer der beiden axialen Stirnseiten des Ventilgliedes 4 aus.

Das Ventilgehäuse 2 weist zwei sich in Achsrichtung der Hauptachse 7 mit Abstand gegenüberliegende erste und zweite Fluidanschlüsse 14a, 14b auf. Jeder dieser Fluidanschlüsse 14a, 14b ist exemplarisch in einem zum Ventilgehäuse 2 gehörenden ersten beziehungsweise zweiten Anschlusskörper 15a, 15b ausgebildet, der vom zugeordneten Fluidanschluss 14a, 14b durchsetzt ist.

Zwischen den beiden Anschlusskörpern 15a, 15b erstreckt sich ein bevorzugt rohrförmig ausgebildeter Gehäusehauptkörper 16. Die beiden Anschlusskörper 15a, 15b sind jeweils unter Abdichtung an einer der beiden axialen Stirnseiten des Gehäusehauptkörpers 16 befestigt. Die Befestigung ist exemplarisch mittels einer Schraubverbindung realisiert, indem jeder Anschlusskörper 15a, 15b über ein Außengewinde verfügt, mit dem er in ein Innengewinde des Gehäusehauptkörpers 16 eingeschraubt ist.

Das Ventilglied 4 ist so im Aufnahmeraum 3 angeordnet, dass jeweils eine seiner beiden Kanalöffnungen 13a, 13b mit einem der beiden Fluidanschlüsse 14a, 14b fluchtet. Auf diese Weise kann ein Fluid, das beispielsweise über den ersten Fluidanschluss 14a eingespeist wird, durch den Ventilkanal 12 hindurchströmen und durch den zweiten Fluidanschluss 14a wieder aus dem Quetschventil 1 austreten. Eine umgekehrte Strömungsrichtung ist ebenfalls möglich.

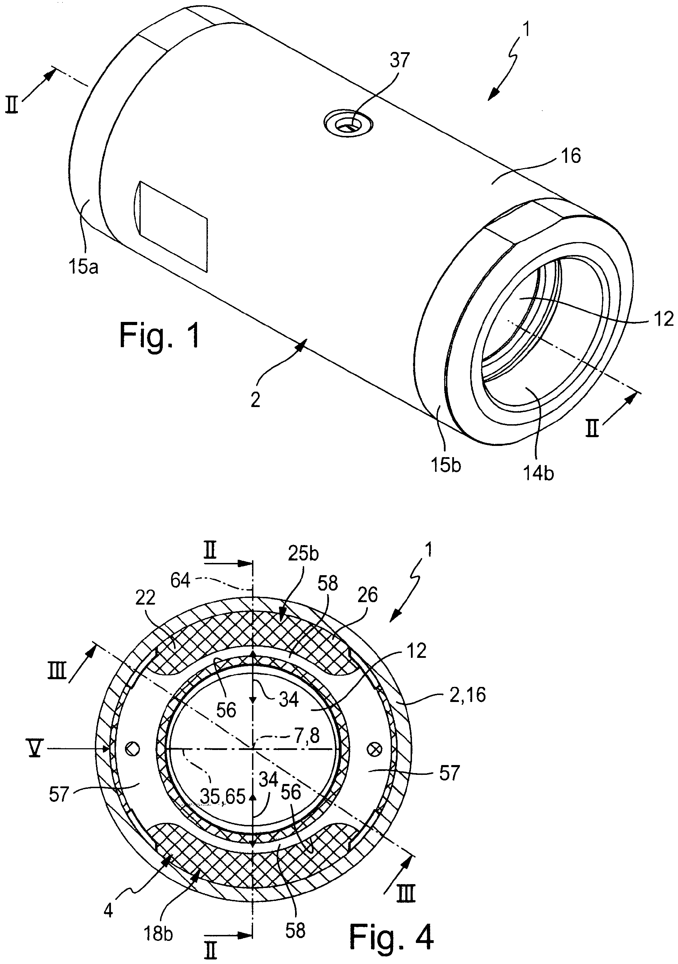

Das Quetschventil 1 ist in der Lage, den freien Strömungsquerschnitt des Ventilkanals 12 zu variieren. Hierbei ist insbesondere eine stufenlose Variation zwischen der illustrierten maximalen Offenstellung und einer in Figur 1 nur strichpunktiert angedeuteten Schließstellung 17 möglich. In der Schließstellung 17 ist der Ventilkanal 12 abgesperrt und es liegt kein freier Strömungsquerschnitt mehr vor.

Das Ventilglied 4 weist an seinen einander entgegengesetzten axialen Endabschnitten jeweils einen Befestigungsflansch 18a, 18b auf, unter dessen Mithilfe das Ventilglied 4 im Ventilgehäuse 2 fixiert ist.

Das Ventilglied 4 setzt sich aus mehreren Bestandteilen zusammen, die bevorzugt zumindest formschlüssig aneinander fixiert sind. Diese Bestandteile sind zum einen ein aus einem gummielastischen Material bestehender Ventilkörper 22 und zum anderen zwei ringförmige, jeweils aus einem formstabilen Material bestehende ringförmige Versteifungskörper 23. Die Versteifungskörper 23 haben zum Erhalt ihrer Formstabilität eine steife Struktur und sind durch die im Betrieb des Quetschventils 1 auf sie einwirkenden Kräfte nicht oder nicht relevant verformbar.

Von den beiden Versteifungskörpern 23 ist jeder ein Bestandteil von einem der beiden Befestigungsflansche 18a, 18b.

Der einstückige gummielastische Ventilkörper 22, der die gleiche Längsachse 8 wie das Ventilglied 4 hat, verfügt über einen sich axial erstreckenden schlauchförmigen Mittelabschnitt 24, an den sich axial beidseits jeweils ein einstückig angeformter Flanschabschnitt 25a, 25b anschließt. Der Mittelabschnitt 24 und die beiden Flanschabschnitte 25a, 25b sind einstückig miteinander verbunden.

Jeder Flanschabschnitt 25a, 25b hat einen zur Längsachse 8 konzentrischen, ringförmigen Befestigungsabschnitt 26, der über einen größeren Außendurchmesser als der schlauchförmige Mittelabschnitt 24 verfügt und daher diesen schlauchförmigen Mittelabschnitt 24 ringsum radial überragt.

Jeweils einer der beiden Versteifungskörper 23 ist in jeweils einen der beiden Flanschabschnitte 25a, 25b in zu der Längsachse 8 koaxialer Anordnung eingebettet. Die Anordnung ist so getroffen, dass der ringförmige Versteifungskörper 23 sich in den ringförmigen Befestigungsabschnitt 26 von radial innen her hinein erstreckt. Ein radial innen liegender Bestandteil eines jeden Versteifungskörpers 23 ist jeweils insbesondere so in dem Flanschabschnitt 25a, 25b platziert, dass er in koaxialer Verlängerung zu dem Mittelabschnitt 24 zu liegen kommt.

Das Ventilglied 4 ist mittels seiner beiden Befestigungsflansche 18a, 18b axial unbeweglich im Ventilgehäuse 2 eingespannt. Hierzu greift jeder Flanschabschnitt 25a, 25b mit seinem radial außen liegenden ringförmigen Befestigungsabschnitt 26 in einen ringförmigen Klemmspalt 27 ein, in dem er axial verspannt ist.

Von den beiden ringförmigen Klemmspalten 27 ist der eine axial außen von dem ersten Anschlusskörper 15a und der andere axial außen von dem zweiten Anschlusskörper 15b begrenzt. Die axial innere Begrenzung der beiden ringförmigen Klemmspalte 27 übernimmt der jeweils zugeordnete axiale Endabschnitt 28a, 28b der rohrförmigen Stützstruktur 6. Mit anderen Worten ist jeder der beiden Befestigungsabschnitte 26 axial zwischen einem der Anschlusskörper 15a, 15b und einem der axialen Endabschnitte 28a, 28b der rohrförmigen Stützstruktur 6 eingespannt.

Enthält das Quetschventil 1 keine rohrförmige Stützstruktur 6, wird deren Funktion von einer anderen Komponente übernommen, insbesondere von einem zum Ventilgehäuse 2 gehörenden Bestandteil.

Das Quetschventil 1 ist mit Betätigungsmitteln ausgestattet, die allgemein mit Bezugsziffer 32 bezeichnet sind und mit deren Hilfe die Betriebsstellung des Ventilgliedes 4 nach Bedarf vorgebbar ist.

Das Funktionsprinzip des Quetschventils 1 basiert darauf, dass die Wandung 33 des Mittelabschnittes 24 aufgrund radialer Krafteinwirkung reversibel radial verformbar ist. Die Betätigungsmittel 32 sind in der Lage, eine bezüglich der Längsachse 7 radial wirkende Verformungskraft von radial außen her auf die Wandung 33 des Mittelabschnittes 24 auszuüben, sodass bezüglich der Längsachse 7 einander diametral gegenüberliegende Wandungsabschnitte 33a, 33b der Wandung 33 eine durch Doppelpfeile 34 illustrierte Verformungsbewegung ausführen können, bei der sie sich entweder radial aneinander annähern oder sich radial voneinander entfernen. Bei der radialen Annäherung dieser Wandungsabschnitte 33a, 33b wird der Mittelabschnitt 24 zusammengequetscht. Dies führt zu der schon erwähnten Variation im freien Strömungsquerschnitt des Ventilkanals 12.

In der Schließstellung sind die beiden Wandungsabschnitte 33a, 33b so weit nach radial innen elastisch verformt, dass sie sich in einem Dichtbereich 34 berühren und unter Abdichtung gegeneinandergedrückt werden, sodass der Ventilkanal 12 verschlossen ist. Der Dichtbereich 34 liegt zweckmäßigerweise in einer die Längsachse 8 enthaltenden Ebene, die als Dichtebene 65 bezeichnet werden kann.

Das Quetschventil 1 des Ausführungsbeispiels hat einen besonders einfachen Aufbau und verfügt über Betätigungsmittel 32, die es ermöglichen, die Verformungsbewegung 34 der Wandungsabschnitte 33a, 33b ausschließlich durch Fluidkraft hervorzurufen. Hierzu enthalten die Betätigungsmittel 32 einen in dem Aufnahmeraum 3 rings um den Mittelabschnitt 24 des Ventilgliedes 4 herum angeordneten Druckbeaufschlagungsraum 36, mit dem ein die Wandung des Ventilgehäuses 2 durchsetzender Steuerkanal 37 kommuniziert. Der Steuerkanal 37 ist unter Zwischenschaltung einer Steuerventileinrichtung wahlweise mit einer Druckquelle verbindbar oder druckmäßig entlastbar, sodass sich in dem Druckbeaufschlagungsraum 36 ein variabler Steuerdruck aufbauen lässt, der den Mittelabschnitt 24 des Ventilkörpers 22 nach Bedarf mehr oder weniger weit zusammenquetscht.

Diese mittels Fluidkraft betätigbare Ausführungsform eines Quetschventils 1 eignet sich insbesondere zur Realisierung einer Bauform des Typs "Normalerweise geöffnet". Liegt in dem Druckbeaufschlagungsraum 36 kein Überdruck an, nimmt der Mittelabschnitt 24 eine neutrale Grundstellung ein, die der maximalen Offenstellung entspricht. Zum Schließen des Ventilkanals 12 wird die Wandung 33 des Mittelabschnittes 24 elastisch gedehnt, sodass sie nach Wegnahme des Steuerdruckes selbsttätig wieder in die Grundstellung bzw. Offenstellung zurückkehrt.

Eine nicht illustrierte Ausführungsform des Quetschventils 1 ermöglicht eine mechanisch hervorrufbare Verformung der Wandung 33 des Mittelabschnittes 24. Hier sind dann am radialen Außenumfang des Mittelabschnittes 24 im Bereich der beiden sich diametral gegenüberliegenden Wandungsabschnitte 33a, 33b zwei sich diametral gegenüberliegende Quetschelemente angeordnet, die durch Einleitung einer Betätigungskraft in bezüglich der Längsachse 8 radialer Richtung bewegbar sind, um mechanisch drückend auf den jeweiligen Wandungsabschnitt 33a, 33b einzuwirken und selbigen radial zu verformen. Die Betätigung der Quetschelemente kann dabei auf beliebige Art und Weise erfolgen, wobei eine mechanische oder elektromechanische Betätigungsart ebenso möglich ist wie eine Betätigung durch Fluidkraft.

Die radiale Verformung der Wandung 33 beim Zusammenquetschen des Mittelabschnittes 24 ruft im Bereich der Befestigungsflansche 18 Zugkräfte hervor, die danach trachten, den Befestigungsabschnitt 26 aus dem ringförmigen Klemmspalt 27 herauszuziehen. Die Zugkräfte sind umso größer, je größer die Nennweite des Ventilkanals 12, das heißt der Durchmesser des Mittelabschnittes 24 ist. Der in den Befestigungsabschnitt 26 integrierte Versteifungskörper 23 erhöht die Stabilität der Befestigungsflansche 18 und verhindert auch unter den vorgenannten Umständen ein Herausziehen oder Herausschnappen der Befestigungsflansche 18 aus den Klemmspalten 27, selbst wenn der ringförmige Befestigungsabschnitt 26 über relativ geringe radiale Abmessungen verfügt. Somit ermöglicht die geschilderte Integration der Versteifungskörper 23 die Einhaltung kompakter Querabmessungen des Quetschventils 1 auch bei großen Nennweiten.

Ist das Quetschventil 1 mit einer rohrförmigen Stützstruktur 6 ausgestattet, sind die beiden ringförmigen Versteifungskörper 23 zweckmäßigerweise so gestaltet, dass sie sich nach radial außen bis in den den axialen Endabschnitten 28a, 28b der rohrförmigen Stützstruktur 6 axial vorgelagerten Bereich erstrecken und auf diese Weise von der rohrförmigen Stützstruktur 6 axial abgestützt werden. Dabei ist ein unmittelbarer Kontakt zwischen den Versteifungskörpern 23 und den besagten Endabschnitten 28a, 28b möglich. Dies ist beim Ausführungsbeispiel realisiert. Der gewünschte Abstützeffekt stellt sich aber auch dann ein, wenn sich eine dünne Schicht des gummielastischen Materials des Ventilkörpers 22 zwischen dem jeweiligen Versteifungskörper 23 und dem benachbarten axialen Endabschnitt 28a, 28b der rohrförmigen Stützstruktur 6 befindet. Beispielsweise kann der in einen Flanschabschnitt 25a, 25b eingebettete Versteifungskörper 23 von einer dünnen Materialhaut des gummielastischen Materials überzogen sein, wenn er im Rahmen eines Spritzgießverfahrens in den Versteifungskörper 23 integriert wird. In der Tat ist es vorteilhaft, wenn der Ventilkörper 22 als ein spritzgegossenes Elastomerteil ausgeführt wird, wobei die Versteifungskörper 23 beim Spritzgießen als Einlegeteile in die Gießform eingelegt und anschließend bei der Spritzgießfertigung vom Material des Ventilkörpers unmittelbar umspritzt werden.

Die Versteifungskörper 23 können derart in den Ventilkörper 22 eingebettet sein, dass sie von dessen gummielastischem Material ringsum umschlossen sind. Zweckmäßig ist es allerdings, wenn die Versteifungskörper 23 an den dem jeweils anderen Versteifungskörper 23 axial zugewandten inneren axialen Stirnflächen 38 zumindest partiell freiliegen, und zwar in solchen Bereichen, in denen sie mit den axialen Endabschnitten 28a, 28b der rohrförmigen Stützstruktur 6 in Kontakt stehen.

Es ist außerdem vorteilhaft, wenn das Ventilglied 4 so ausgebildet ist, dass die Versteifungskörper 23 im Bereich ihres radialen Außenumfanges 42 zumindest partiell von dem gummielastischen Material des Ventilkörpers 22 nicht bedeckt sind. Dadurch kann gummielastisches Material eingespart werden. Da die Versteifungskörper 23 nicht zur unmittelbaren Verankerung des Ventilgliedes 4 im Ventilgehäuse 2 benötigt werden, ist es insgesamt vorteilhaft, wenn jeder Versteifungskörper 23 ohne radiale Überragung der radialen Außenkontur 43 des zugeordneten Flanschabschnittes 25a, 25b in den Flanschabschnitt 25a, 25b eingebettet ist. Die radiale Außenkontur 43 des Flanschabschnittes 25a, 25b ist vorzugsweise rund und insbesondere kreisrund.

Vorzugsweise ist die rohrförmige Stützstruktur 6 an ihren beiden axialen Endabschnitten 28a, 28b jeweils mit mehreren axial abstehenden Stützvorsprüngen 44 ausgestattet, die den jeweils axial vorgelagerten Versteifungskörper 23 axial abstützen. Jeder axiale Endabschnitt 28a, 28b ist mit mehreren solcher axialen Stützvorsprüngen 44 ausgestattet, die in der Umfangsrichtung der Längsachse 45 der rohrförmigen Stützstruktur 6 mit Abstand zueinander verteilt angeordnet sind. Die Längsachse 45 der rohrförmigen Stützstruktur 6 fällt bevorzugt mit der Längsachse 8 des Ventilgliedes 4 zusammen. Über die jeweils zugeordneten mehreren Stützvorsprünge 44 ist jeder Versteifungskörper 23 mithin mehrfach und dank seines Ringumfanges punktuell abgestützt. Exemplarisch verfügt jeder axiale Endabschnitt 28a, 28b der rohrförmigen Stützstruktur 6 über vier der axialen Stützvorsprünge 44.

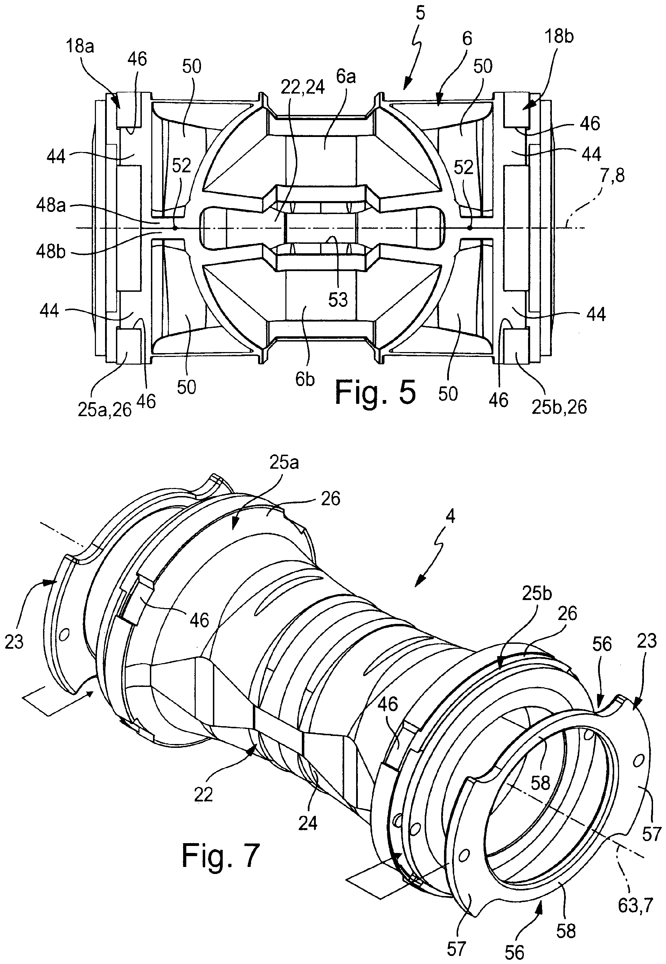

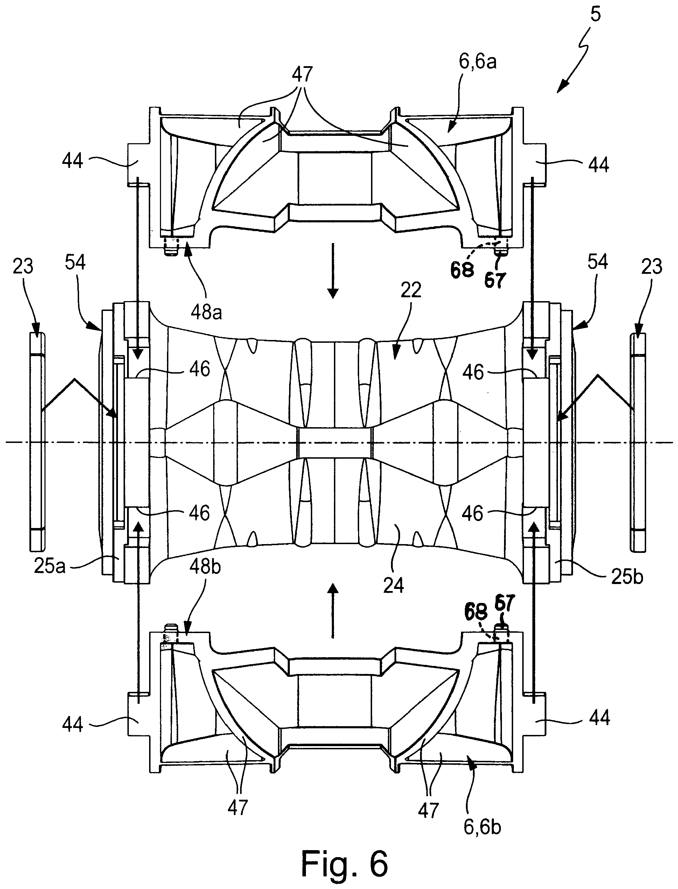

Die axialen Stützvorsprünge 44 sind insbesondere laschenartig oder flügelartig ausgebildet. Sehr gut erkennbar ist dies insbesondere anhand der Figuren 5 und 6.

Damit jeder Versteifungskörper 23 einerseits so weit wie möglich von dem gummielastischen Material des Ventilkörpers 22 umschlossen ist und dennoch andererseits die axialen Stützvorsprünge 44 in die unmittelbare Nähe zum benachbarten Versteifungskörper 23 ragen oder den betreffenden Versteifungskörper 23 sogar berühren können, sind in den Befestigungsabschnitten 26 der beiden Flanschabschnitte 25a, 25b zweckmäßigerweise mehrere Aufnahmetaschen 46 ausgespart, in die jeweils einer der axialen Stützvorsprünge 44 eingreift. Die Anzahl der Aufnahmetaschen 46 entspricht derjenigen der Stützvorsprünge 44. Jede Aufnahmetasche 46 ist zweckmäßigerweise radial außen und auch axial zum jeweils weiter beabstandeten Befestigungsabschnitt 26 hin offen.

Die in der Umfangsrichtung des Ventilgliedes 4 gemessene Breite der Aufnahmetaschen 46 entspricht zweckmäßigerweise der in der Umfangsrichtung der rohrförmigen Stützstruktur 6 gemessenen Breite der Stützvorsprünge 44, sodass Letztere in der Umfangsrichtung des Ventilgliedes 4 beidseits formschlüssig abgestützt sind. Auf diese Weise ergeben sich eine Verdrehsicherung der Stützstruktur 6 bezüglich des Ventilgliedes 4 und insbesondere auch eine Positionsvorgabe der Stützstruktur 6 bezüglich des Ventilgliedes 4 in dessen Umfangsrichtung. Zweckmäßigerweise dient die seitliche, das heißt die in der Umfangsrichtung des Ventilgliedes 4 erfolgende Abstützung der Stützvorsprünge 44 an den seitlichen Begrenzungsflächen der Aufnahmetaschen 46 auch zur Aufnahme beziehungsweise Übertragung von Torsionskräften, die beim Zusammenbau des Quetschventils 1 entstehen, insbesondere wenn die Anschlusskörper 15a, 15b in den Gehäusehauptkörper 16 eingeschraubt werden und während der dabei stattfindenden Drehbewegung an eine axial zugewandte Dichtfläche 54 des benachbarten Flanschabschnittes 25a, 25b angedrückt werden. Die vorhandenen mehreren Stützvorsprünge 44 sind in der Umfangsrichtung der Stützstruktur 6 zweckmäßigerweise gleichmäßig verteilt.

Die rohrförmige Stützstruktur 6 kann beispielsweise ein in der Umfangsrichtung geschlossener, bevorzugt einteiliger Rohrkörper sein. Als wesentlich vorteilhafter wird allerdings eine Ausgestaltung angesehen, bei der die rohrförmige Stützstruktur aus mehreren in der Umfangsrichtung des Ventilgliedes 4, also rings um die Längsachse 8 herum, aneinandergereihten individuellen Stützschalen 6a, 6b besteht. Dies trifft auf das Ausführungsbeispiel zu. Besonders zweckmäßig ist eine Unterteilung der Stützstruktur 6 in zwei Stützschalen 6a, 6b, die sich jeweils zumindest im Wesentlichen entlang eines Bogenwinkels von 180° außen um den Ventilkörper 22 herum erstrecken. Die Stützschalen 6a, 6b haben bevorzugt eine bogenförmige Querschnittskontur, sodass sich im zusammengesetzten Zustand außen eine in etwa kreiszylindrische Umfangskontur ergibt, die allerdings zur Gewichtseinsparung mit mehreren Ausnehmungen 50 versehen sein kann, was auf das Ausführungsbeispiel zutrifft.

Die exemplarisch vorhandenen Stützschalen 6a, 6b sind im Bereich ihres von dem Ventilkörper 22 radial abgewandten Außenumfanges mit einer Mehrzahl von Versteifungsrippen 47 versehen. Zwischen den Versteifungsrippen 47 befinden sich die der Gewichtseinsparung dienenden Ausnehmungen 50.

Jede Stützschale 6a, 6b hat zwei bezüglich der Längsachse 45 in einander entgegengesetzte Umfangsrichtungen orientierte längsseitige Randabschnitte 48a, 48b. Im montierten Zustand liegen die Stützschalen 6a, 6b in je einem Fügebereich 52 mit einander zugewandten längsseitigen Randabschnitten 48a, 48b paarweise aneinander an.

Exemplarisch ist jede der Stützschalen 6a, 6b an beiden axialen Endbereichen mit jeweils mindestens einem und vorzugsweise mit mehreren der schon erwähnten axialen Stützvorsprünge 44 ausgestattet. Zweckmäßigerweise weist jede Stützschale 6a, 6b an jedem axialen Endbereich zwei solcher Stützvorsprünge 44 auf.

Die längsseitigen Randabschnitte 48a, 48b der Stützschalen 6a, 6b können sowohl geradlinig als auch abgestuft ausgeführt sein. Letzteres trifft auf das Ausführungsbeispiel zu, wobei hier die Abstufungen so gewählt sind, dass sich die längsseitigen Randabschnitte 48a, 48b nur partiell berühren. Auf diese Weise können die aneinander angesetzten Stützschalen 6a, 6b eine oder mehrere Durchtrittsöffnungen 53 definieren, die beispielsweise schlitzartig gestaltet sind und die einen Fluiddurchtritt ermöglichen, der eine Fluidbeaufschlagung des Mittelabschnittes 24 zum Zusammenquetschen des Mittelabschnittes 24 begünstigt. Das in den Druckbeaufschlagungsraum 36 eingespeiste Druckmedium kann durch die mindestens eine Durchtrittsöffnung 53 hindurch in den unmittelbaren radialen Umfangsbereich des Mittelabschnittes 24 gelangen.

Jeder Flanschabschnitt 25a, 25b ist an der vom Mittelabschnitt 24 axial abgewandten axialen Außenfläche zweckmäßigerweise mit einer weiter oben schon erwähnten Dichtfläche 54 versehen, mit der er im montierten Zustand des Ventilgliedes 4 an einer axial gegenüberliegenden axialen Innenfläche 55 des benachbarten Anschlusskörpers 15a, 15b unter Abdichtung anliegt. Das Ventilglied 4 ist zwischen den beiden Anschlusskörpern 15a, 15b axial eingespannt, sodass jede Dichtfläche 54 unter sicherer Abdichtung an die gegenüberliegende axiale Innenfläche 55 des benachbarten Anschlusskörpers 15a, 15b angepresst wird.

Zweckmäßigerweise verfügen die Stützschalen 6a, 6b an den einander zugewandten längsseitigen Randabschnitten 48a, 48b über in der Umfangsrichtung des Ventilkörpers 22 orientierte, zueinander komplementäre Zapfen 67 und Löcher 68, die formschlüssig ineinander eingreifen, wenn die Stützschalen 6a, 6b im Bereich des Außenumfanges des Ventilkörpers 22 aneinander angesetzt werden. Der dadurch entstehende Verbund zwischen den montierten Stützschalen 6a, 6b erhöht die Stabilität in Bezug auf Drehmomente, die beim Zusammenbau des Quetschventils 1 aufgrund des Einschraubens der Anschlusskörper 15a, 15b auftreten können.

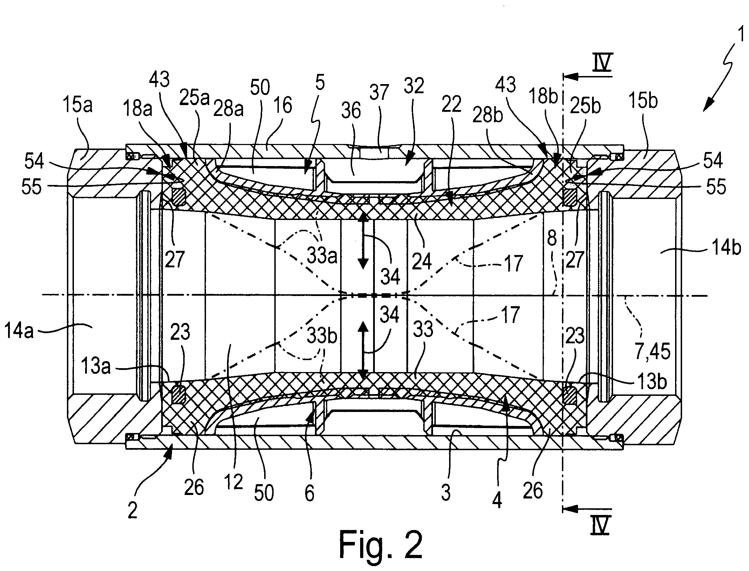

Bei dem Ausführungsbeispiel der Figuren 1 bis 6 verfügt jeder Versteifungskörper 23 im Bereich seines radialen Außenumfanges über mehrere randseitige Aussparungen 56. Die Aussparungen 56 resultieren aus sich in der Umfangsrichtung des ringförmigen Versteifungskörpers 23 verändernden radialen Dickenabmessungen des jeweiligen ringförmigen Versteifungskörpers 23. Bevorzugt verfügt der ringförmige Versteifungskörper 23 über zwei einander diametral gegenüberliegende bogenförmige Primärabschnitte 57 und außerdem über zwei sich ebenfalls diametral gegenüberliegende, die beiden Primärabschnitte 57 jeweils paarweise verbindende Sekundärabschnitte 58. Die radiale Materialdicke der Primärabschnitte 57 ist dabei größer als diejenige der Sekundärabschnitte 58, sodass die Primärabschnitte 57 abgestuft in die Sekundärabschnitte 58 übergehen, wobei die Aussparungen 56 jeweils radial innen von einem Sekundärabschnitt 58 und in der Umfangsrichtung des Versteifungskörpers 23 beidseits von je einem der Primärabschnitte 57 begrenzt sind.

Sowohl die Primärabschnitte 57 als auch die Sekundärabschnitte 58 sind radial außen bevorzugt kreisbogenförmig gekrümmt.

Vor allem die Figur 4 macht deutlich, dass sich das gummielastische Material des Ventilkörpers 22 durch die Aussparungen 56 axial hindurch erstreckt und darüber hinaus sowohl die Primärabschnitte 57 als auch die Sekundärabschnitte 58 axial beidseits flankiert. Auf diese Weise ist der Versteifungskörper 23 optimal formschlüssig ins Innere des Flanschabschnittes 25a, 25b eingebettet.

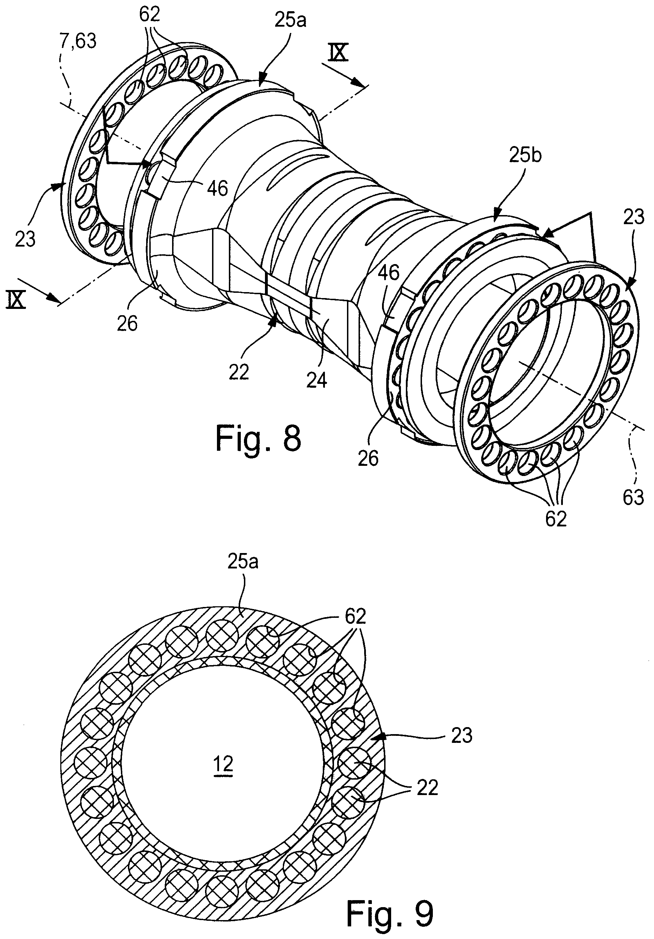

Eine andere Möglichkeit zum Erhalt einer intensiven formschlüssigen Verankerung der Versteifungskörper 23 im Ventilkörper 22 illustriert das Ausführungsbeispiel der Figuren 8 und 9. Hierbei weist jeder ringförmige Versteifungskörper 23 eine Vielzahl von axialen Durchbrechungen 62 auf, die ihn axial durchsetzen. Die Durchbrechungen 62 sind in der Umfangsrichtung des betreffenden Versteifungskörpers 23, also rings um die Längsachse 63 des Versteifungskörpers 23 herum, verteilt. Zumindest einige und bevorzugt sämtliche axialen Durchbrechungen 62 sind randseitig ringsum geschlossen und haben die Form von Bohrungen oder auch von Schlitzen, wobei Letztere bevorzugt bogenförmig ausgebildet sind und sich jeweils ein Stückweit in der Umfangsrichtung des jeweiligen Versteifungskörpers 23 erstrecken.

Sämtliche axialen Durchbrechungen 62 sind, wie die Figur 9 verdeutlicht, vom Material des Ventilkörpers 22 durchsetzt und vollständig ausgefüllt, und zwar genauer gesagt von Materialbestandteilen des jeweiligen Flanschabschnittes 25a, 25b.

Auch beim Ausführungsbeispiel der Figuren 8 und 9 bedeckt das gummielastische Material des Ventilkörpers 22 zumindest größtenteils beide axialen Stirnflächen des Versteifungskörpers 23, sodass dieser optimal im Material des Versteifungskörpers 23 verankert ist.

Beim Ausführungsbeispiel der Figuren 1 bis 7 haben die beiden sich diametral gegenüberliegenden randseitigen Aussparungen 56 zweckmäßigerweise jeweils eine bogenförmige Erstreckung.

Es ist vorteilhaft, wenn die randseitigen Aussparungen 56 so platziert sind, dass sie von einer Verformungsebene 64 geschnitten werden, die mit der Längsachse 7 des Ventilkörpers 22 zusammenfällt und außerdem in der Richtung der Verformungsbewegung 34 der Wandung 33 orientiert ist. Mit anderen Worten liegen die Aussparungen 56 axial beidseits der weiter oben schon erwähnten Dichtebene 65. Mit einer solchen Ausgestaltung ist dem Umstand Rechnung getragen, dass in den Bereichen, in denen die Aussparungen 56 liegen, beim Zusammenquetschen des Mittelabschnittes 24 besonders hohe Zugkräfte auftreten, die ein lokales Ablösen des gummielastischen Materials vom Versteifungskörper 23 hervorrufen könnten, wenn dieses gummielastische Material in dem besagten Bereich an den Versteifungskörper 23 angeformt wäre. Dadurch jedoch, dass in diesem besagten Bereich die Aussparung 56 vorhanden ist, ergibt sich ein durchgängiger Materialverbund des gummielastischen Materials zwischen den Versteifungskörper 23 axial beidseits flankierenden Abschnitten des Ventilkörpers 22 wodurch Beeinträchtigungen des Zusammenhaltes zwischen dem Versteifungskörper 23 und dem Ventilkörper 22 vermieden werden können.

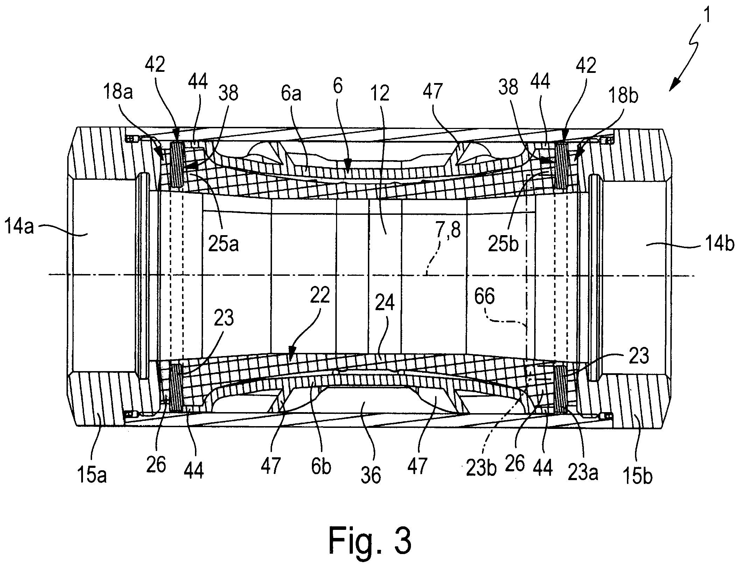

Bei beiden Ausführungsbeispielen sind die Versteifungskörper 23 jeweils ringförmig gestaltet. Dabei hat jeder Versteifungskörper 23 im Wesentlichen die Form einer im Zentrum gelochten Scheibe, also einer Ringscheibe. Eine noch bessere Stabilisierung der gummielastischen Struktur des Ventilkörpers 22 kann allerdings dadurch erzielt werden, dass für den Versteifungskörper 23 ein L-förmiges Querschnittsprofil gewählt wird, wie dies in Figur 3 bei 66 strichpunktiert angedeutet ist. Hier hat dann der ringförmige Versteifungskörper 23 einen in den Befestigungsabschnitt 26 hineinragenden ringscheibenförmigen Außenabschnitt 23a und einen vom inneren Rand dieses ringscheibenförmigen Außenabschnittes 23a axial in Richtung zum anderen Versteifungskörper 23 abstehenden hülsenförmigen Innenabschnitt 23b. Der Innenabschnitt 23b ragt koaxial in den Mittelabschnitt 24 hinein und stabilisiert dadurch den Übergangsbereich zwischen diesem Mittelabschnitt 24 und dem Flanschabschnitt 25a, 25b.

## Patentansprüche

1. Quetschventil, mit einem Ventilgehäuse (2), in dem sich zwischen zwei Fluidanschlüssen (14a, 14b) ein einen axial durchgehenden Ventilkanal (12) umschließendes und an seinen beiden axialen Enden jeweils einen ringförmigen Befestigungsflansch (18a, 18b) aufweisendes Ventilglied (4) erstreckt, das über einen aus gummielastischem Material bestehenden Ventilkörper (22) verfügt, der einen schlauchförmigen Mittelabschnitt (24) mit radial verformbarer Wandung (33) und an den beiden Enden des Mittelabschnittes (24) einstückig angeformte, zu den Befestigungsflanschen (18a, 18b) gehörende Flanschabschnitte (25a, 25b) aufweist, wobei jeder Flanschabschnitt (25a, 25b) einen den Mittelabschnitt (24) radial überragenden, zur axialen Fixierung des Ventilgliedes (4) im Ventilgehäuse (2) genutzten integralen ringförmigen Befestigungsabschnitt (26) aufweist, und wobei in jeden Flanschabschnitt (25a, 25b) des Ventilkörpers (22) ein aus einem formstabilen Material bestehender, sich in den Befestigungsabschnitt (26) hinein erstreckender ringförmiger Versteifungskörper (23) koaxial eingebettet ist, **dadurch gekennzeichnet, dass** die eingebetteten Versteifungskörper (23) jeweils eine oder mehrere axiale Durchbrechungen (62) aufweisen und/oder über eine oder mehrere randseitige Aussparungen (56) verfügen, die jeweils vom Material des Ventilkörpers (22) formschlüssig durchsetzt ist beziehungsweise sind.

2. Quetschventil nach Anspruch 1, **dadurch gekennzeichnet, dass** jeder Flanschabschnitt (25a, 25b) radial außen eine runde und insbesondere kreisrunde Außenkontur (43) hat, wobei jeder Versteifungskörper (23) ohne radiale Überragung der radialen Außenkontur (43) des Flanschabschnittes (25a, 25b) in den Flanschabschnitt (25a, 25b) eingebettet ist.

3. Quetschventil nach Anspruch 1 oder 2, **dadurch gekennzeichnet, dass** das Ventilglied (4) Bestandteil einer Ventilpatrone (5) ist, die in einen internen Aufnahmeraum (3) des Ventilgehäuses (2) eingesetzt ist und die eine den Mittelabschnitt (24) des Ventilkörpers (22) radial außen umschließende formstabile rohrförmige Stützstruktur (6) aufweist, die die beiden ringförmigen Versteifungskörper (23) mit ihren beiden axialen Endabschnitten (28a, 28b) axial abstützt, wobei sich jeder Versteifungskörper (23) in den dem zugeordneten axialen Endabschnitt (28a, 28b) der rohrförmigen Stützstruktur (6) axial vorgeordneten Bereich erstreckt.

4. Quetschventil nach Anspruch 3, **dadurch gekennzeichnet, dass** sich die Versteifungskörper (23) jeweils unmittelbar oder unter Zwischenfügung einer Materialschicht des gummielastischen Materials des Ventilkörpers (22) an der rohrförmigen Stützstruktur (6) abstützen.

5. Quetschventil nach Anspruch 3 oder 4, **dadurch gekennzeichnet, dass** die rohrförmige Stützstruktur (6) an ihren beiden axialen Endabschnitten (28a, 28b) mehrere entlang ihres Umfanges verteilt angeordnete, bevorzugt laschenartig ausgebildete axiale Stützvorsprünge (44) aufweist, mit denen sie den jeweils axial vorgeordneten Versteifungskörper (23) abstützt.

6. Quetschventil nach Anspruch 5, **dadurch gekennzeichnet, dass** in den Befestigungsabschnitten (26) der beiden Flanschabschnitte (25a, 25b) radial außen und axial zum jeweils anderen Befestigungsabschnitt (26) hin offene Aufnahmetaschen (46) ausgespart sind, in die jeweils einer der Stützvorsprünge (44) eingreift.

7. Quetschventil nach einem der Ansprüche 3 bis 6, **dadurch gekennzeichnet, dass** die rohrförmige Stützstruktur (6) aus mehreren und insbesondere aus zwei in der Umfangsrichtung des Ventilgliedes (4) aneinandergereihten und zweckmäßigerweise jeweils eine bogenförmige Querschnittskontur aufweisenden Stützschalen (6a, 6b) besteht.

8. Quetschventil nach einem der Ansprüche 1 bis 7, **dadurch gekennzeichnet, dass** jeder Flanschabschnitt (25a, 25b) an der vom Mittelabschnitt (24) axial abgewandten axialen Außenfläche eine Dichtfläche (54) aufweist, mit der er an einem den zugeordneten Fluidanschluss (14a, 14b) definierenden Anschlusskörper (15a, 15b) des Ventilgehäuses (2) unter Abdichtung axial anliegt.

9. Quetschventil nach einem der Ansprüche 1 bis 8, **dadurch gekennzeichnet, dass** die eingebetteten Versteifungskörper (23) an einander diametral gegenüberliegenden Außenumfangsabschnitten jeweils eine sich ein Stückweit in der Umfangsrichtung des Versteifungskörpers (23) erstreckende bogenförmige randseitige Aussparung (56) aufweisen, die vom Material des Ventilkörpers (22) formschlüssig durchsetzt ist, wobei diese beiden randseitigen Aussparungen (56) zweckmäßigerweise auf einander entgegengesetzten Seiten einer Dichtebene (65) liegen, in der in einer Schließstellung des Ventilgliedes (4) sich diametral gegenüberliegende Wandungsabschnitte (33a, 33b) des Mittelabschnittes (24) unter Abdichtung aneinander anliegen.

10. Quetschventil nach einem der Ansprüche 1 bis 9, **dadurch gekennzeichnet, dass** mindestens ein und zweckmäßigerweise jeder ringförmige Versteifungskörper (23) die Form einer Ringscheibe hat.

11. Quetschventil nach einem der Ansprüche 1 bis 10, **dadurch gekennzeichnet, dass** mindestens ein und zweckmäßigerweise jeder ringförmige Versteifungskörper (23) einen in den Befestigungsabschnitt (26) hineinragenden ringscheibenförmigen Außenabschnitt (23a) und einen vom inneren Rand dieses ringscheibenförmigen Außenabschnittes (23a) axial in Richtung zum anderen Versteifungskörper (23) abstehenden hülsenförmigen Innenabschnitt (23b) hat.

12. Quetschventil nach einem der Ansprüche 1 bis 11, **dadurch gekennzeichnet, dass** jeder Versteifungskörper (23) aus Metall oder aus einem Kunststoffmaterial oder aus einem Verbundmaterial besteht.

13. Quetschventil nach einem der Ansprüche 1 bis 12, **dadurch gekennzeichnet, dass** der Ventilkörper (22) ein spritzgegossenes Elastomerteil ist, das zur Einbettung der Versteifungskörper (23) bei seiner Spritzgießfertigung an die Versteifungskörper (23) angeformt wurde.

14. Quetschventil nach einem der Ansprüche 1 bis 13, **dadurch gekennzeichnet, dass** es mit Betätigungsmitteln (32) ausgestattet ist, die eine reversible radiale Verformung der Wandung (33) des Mittelabschnittes (24) hervorrufen können, um eine Veränderung des freien Querschnittes des Ventilkanals (12) zu bewirken.

15. Quetschventil nach Anspruch 14, **dadurch gekennzeichnet, dass** die Betätigungsmittel (32) für eine durch Fluidkraft hervorrufbare Verformung der Wandung (33) des Mittelabschnittes (24) ausgelegt sind.

## Claims

1. Pinch valve, with a valve casing (2), in which there extends between two fluid ports (14a, 14b) a valve member (4) encompassing an axially continuous valve passage (12) and having an annular mounting flange (18a, 18b) at each of its two axial ends, also having a valve body (22) made of rubber-elastic material which has a hose-like centre section (24) with radially deformable wall (33) and, at the two ends of the centre section (24), integrally moulded flange sections (25a, 25b) belonging to the mounting flanges (18a, 18b), wherein each flange section (25a, 25b) has an integral annular mounting section (26) projecting radially over the centre section (24) and used for axial fixing of the valve member (4) in the valve casing (2), and wherein there is coaxially embedded in each flange section (25a, 25b) of the valve body (22) an annular reinforcing body (23) made of dimensionally stable material and extending into the mounting section (26), **characterised in that** the embedded reinforcing bodies (23) each have one or more axial through holes (62) and/or one or more edge-side recesses (56), through each of which material of the valve body (22) passes with positive locking.

2. Pinch valve according to claim 1, **characterised in that** each flange section (25a, 25b) has on the radial outside a round and in particular circular external contour (43), wherein each reinforcing body (23) is embedded in the flange section (25a, 25b) without radially projecting over the radial external contour (43) of the flange section (25a, 25b).

3. Pinch valve according to claim 1 or 2, **characterised in that** the valve member (4) is part of a valve cartridge (5) which is inserted in an internal mounting space (3) of the valve casing (2) and which has a dimensionally stable tubular support structure (6) encompassing the radial outside of the centre section (24) of the valve body (22) and axially supporting the two annular reinforcing bodies (23) with its two axial end sections (28a, 28b), wherein each reinforcing body (23) extends into the area axially in front of the assigned axial end section (28a, 28b) of the tubular support structure (6).

4. Pinch valve according to claim 3, **characterised in that** the reinforcing bodies (23) each rest on the tubular support structure (6), directly or with the interposition of a material layer of the rubber-elastic material of the valve body (22).

5. Pinch valve according to claim 3 or 4, **characterised in that** the tubular support structure (6) has at its two axial end sections (28a, 28b) several axial support projections (44), preferably tab-like in form and distributed along its periphery, with which it supports the reinforcing bodies (23), each mounted axially in front.

6. Pinch valve according to claim 5, **characterised in that**, in the mounting sections (26) of the two flange sections (25a, 25b), mounting pockets (46) opening radially outwards and axially towards the other respective mounting section (26) are cut out, in each of which one of the support projections (44) engages.

7. Pinch valve according to any of claims 3 to 6, **characterised in that** the tubular support structure (6) is comprised of several support shells (6a, 6b), in particular of two lined up in the peripheral direction of the valve member (4) and each having expediently a curved cross-sectional contour.

8. Pinch valve according to any of claims 1 to 7, **characterised in that** each flange section (25a, 25b) has on the outer surface facing axially away from the centre section (24) a sealing face (54), with which it fits up with sealing against a connection body (15a, 15b) of the valve casing (2) defining the assigned fluid port (14a, 14b).

9. Pinch valve according to any of claims 1 to 8, **characterised in that** the embedded reinforcing bodies (23) each have on diametrically opposite outer peripheral sections a curved edge-side recess (56) extending a short distance in the peripheral direction of the reinforcing body (23), through which material of the valve body (22) passes with positive locking, wherein these two edge-side recesses (56) lie expediently on opposite sides of a sealing plane (65) in which, in a closed position of the valve member (4), diametrically opposite wall sections (33a, 33b) of the centre section (24) abut one another with sealing.

10. Pinch valve according to any of claims 1 to 9, **characterised in that** at least one and expediently each annular reinforcing body (23) has the shape of an annular disc.

11. Pinch valve according to any of claims 1 to 10, **characterised in that** at least one and expediently each annular reinforcing body (23) has an outer section (23a) extending into the mounting section (26) and a sleeve-shaped inner section (23b) protruding axially from this annular-disc-shaped outer section (23a) in the direction of the other reinforcing body (23).

12. Pinch valve according to any of claims 1 to 11, **characterised in that** each reinforcing body (23) is made of metal or of a plastic material or of a composite material.

13. Pinch valve according to any of claims 1 to 12, **characterised in that** the valve body (22) is an injection moulded elastomer part which, for embedding of the reinforcing body (23), has been moulded to the reinforcing body (23) in the injection moulding process.

14. Pinch valve according to any of claims 1 to 13, **characterised in that** it is equipped with actuating means (32) which are able to generate a reversible radial deformation of the wall (33) of the centre section (24), in order to effect a change in the free cross-section of the valve passage (12).

15. Pinch valve according to claim 14, **characterised in that** the actuating means (32) are designed for deformation of the wall (33) of the centre section (24) by means of fluid power.

## Revendications

1. Vanne à manchon, avec un carter de vanne (2), dans lequel s'étend, entre deux raccords de fluide (14a, 14b), un organe de vanne (4) renfermant un canal de vanne (12) traversant de manière axiale et présentant, au niveau de ses deux extrémités axiales, respectivement une bride de fixation (18a, 18b) de forme annulaire, qui dispose d'un corps de vanne (22) constitué d'un matériau élastique comme du caoutchouc, qui présente une section centrale (24) en forme de tube flexible avec une paroi (33) radialement déformable et des sections de bride (25a, 25b) formées d'un seul tenant au niveau des deux extrémités de la section centrale (24), faisant partie des brides de fixation (18a, 18b), dans laquelle chaque section de bride (25a, 25b) présente une section de fixation (26) de forme annulaire intégrale dépassant radialement de la section centrale (24), utilisée aux fins du blocage axial de l'organe de vanne (4) dans le carter de vanne (2), et dans laquelle un corps de renforcement (23) de forme annulaire constitué d'un matériau à forme stable, s'étendant à l'intérieur de la section de fixation (26) est intégré de manière coaxiale dans chaque section de bride (25a, 25b) du corps de vanne (22), **caractérisée en ce que** les corps de renforcement (23) intégrés présentent respectivement un ou plusieurs ajours (62) axiaux et/ou disposent d'un ou de plusieurs évidements (56) côté bord, qui est ou sont traversé(s) par complémentarité de forme respectivement par le matériau du corps de vanne (22).

2. Vanne à manchon selon la revendication 1, **caractérisée en ce que** chaque section de bride (25a, 25b) a à l'extérieur radialement un contour extérieur (43) rond et en particulier circulaire rond, dans laquelle chaque corps de renforcement (23) est intégré dans la section de bride (25a, 25b) sans dépassement radial du contour extérieur (43) radial de la section de bride (25a, 25b).

3. Vanne à manchon selon la revendication 1 ou 2, **caractérisée en ce que** l'organe de vanne (4) est un élément constitutif d'une cartouche de vanne (5), qui est insérée dans un espace de logement (3) interne du carter de vanne (2) et qui présente une structure de soutien (6) de forme tubulaire et de forme stable renfermant à l'extérieur radialement la section centrale (24) du corps de vanne (22), qui soutient de manière axiale les deux corps de renforcement (23) de forme tubulaire avec leurs sections d'extrémité (28a, 28b) axiales, dans laquelle chaque corps de renforcement (23) s'étend dans la zone disposée en amont de manière axiale à la section d'extrémité (28a, 28b) axiale associée de la structure de soutien (6) de forme tubulaire.

4. Vanne à manchon selon la revendication 3, **caractérisée en ce que** les corps de renforcement (23) prennent appui au niveau de la structure de soutien (6) de forme tubulaire respectivement directement ou en intercalant une couche de matériau du matériau élastique comme du caoutchouc du corps de vanne (22).

5. Vanne à manchon selon la revendication 3 ou 4, **caractérisée en ce que** la structure de soutien (6) de forme tubulaire présente au niveau de ses deux sections d'extrémité (28a, 28b) axiales plusieurs parties faisant saillie de soutien (44) axiales disposées de manière répartie le long de sa périphérie, réalisées de manière préférée à la manière de languettes, avec lesquelles elle soutient le corps de renforcement (23) disposé en amont respectivement de manière axiale.

6. Vanne à manchon selon la revendication 5, **caractérisée en ce que** sont évidés, dans les sections de fixation (26) des deux sections de bride (25a, 25b), des compartiments de logement (46) ouverts à l'extérieur radialement et axialement en direction de l'autre section de fixation (26) respectivement, avec lesquels respectivement une des parties faisant saillie de soutien (44) vient en prise.

7. Vanne à manchon selon l'une quelconque des revendications 3 à 6, **caractérisée en ce que** la structure de soutien (6) de forme tubulaire est constituée de plusieurs et en particulier de deux coques de soutien (6a, 6b) alignées dans la direction périphérique de l'organe de vanne (4) et présentant de manière appropriée respectivement un contour de section transversale en forme d'arc.

8. Vanne à manchon selon l'une quelconque des revendications 1 à 7, **caractérisée en ce que** chaque section de bride (25a, 25b) présente, au niveau de la surface extérieure axiale opposée de manière axiale à la section centrale (24), une surface étanche (54), avec laquelle elle repose de manière axiale moyennant une étanchéification au niveau d'un corps de raccordement (15a, 15b), définissant le raccordement de fluide (14a, 14b) associé, du carter de vanne (2).

9. Vanne à manchon selon l'une quelconque des revendications 1 à 8, **caractérisée en ce que** les corps de renforcement (23) intégrés présentent, au niveau des sections de périphérie extérieure diamétralement opposées, respectivement un évidement (56) côté bord en forme d'arc s'étendant légèrement dans la direction périphérique du corps de renforcement (23), qui est traversé par complémentarité de forme par le matériau du corps de vanne (22), dans laquelle ces deux évidements (56) côté bord se situent de manière appropriée sur des côtés opposés les uns les autres d'un niveau étanche (65), dans lequel des sections de paroi (33a, 33b), diamétralement opposées, de la section centrale (24) reposent les unes contre les autres moyennant une étanchéification dans une position de fermeture de l'organe de vanne (4).

10. Vanne à manchon selon l'une quelconque des revendications 1 à 9, **caractérisée en ce qu'**au moins un et de manière appropriée chaque corps de renforcement (23) de forme annulaire a la forme d'un disque annulaire.

11. Vanne à manchon selon l'une quelconque des revendications 1 à 10, **caractérisée en ce qu'**au moins et de manière appropriée chaque corps de renforcement (23) de forme annulaire a une section extérieure (23a) en forme de disque annulaire dépassant à l'intérieur de la section de fixation (26) et une section intérieure (23b) en forme de douille dépassant de manière axiale en direction de l'autre corps de renforcement (23) du bord intérieur de ladite section extérieure (23a) en forme de disque annulaire.

12. Vanne à manchon selon l'une quelconque des revendications 1 à 11, **caractérisée en ce que** chaque corps de renforcement (23) est constitué de métal ou d'un matériau en matière plastique ou d'un matériau composite.

13. Vanne à manchon selon l'une quelconque des revendications 1 à 12, **caractérisée en ce que** le corps de soupape (22) est une pièce élastomère coulée par injection, qui a été formée afin d'intégrer les corps de renforcement (23) dans le cas d'une fabrication par coulée par injection au niveau des corps de renforcement (23).

14. Vanne à manchon selon l'une quelconque des revendications 1 à 13, **caractérisée en ce qu'**elle est équipée de moyens d'actionnement (32), qui peuvent provoquer une déformation radiale réversible de la paroi (33) de la section centrale (24) afin d'entraîner une modification de la section transversale libre du canal de vanne (12).

15. Vanne à manchon selon la revendication 14, **caractérisée en ce que** les moyens d'actionnement (32) sont configurés en vue d'une déformation, pouvant être provoquée par une force de fluide, de la paroi (33) de la section centrale (24).
